# EUROPÄISCHE PATENTANMELDUNG

(11) **EP 0 665 389 A1**
(43) Veröffentlichungstag der Anmeldung: **02.08.1995**
(21) Anmeldenummer: 95100102.3
(22) Anmeldetag: 05.01.1995
(51) Int. Cl.: F16F 15/00

(54) **Lagerung für ein um mindestens eine Achse bewegliches Bauteil**

(30) Priorität: 26.01.1994 DE 4402107; 22.07.1994 DE 4426160
(71) Anmelder: Carl Zeiss, D-89518 Heidenheim (Brenz) (DE); CARL-ZEISS-STIFTUNG, HANDELND ALS CARL ZEISS, D-89518 Heidenheim (Brenz) (DE)
(72) Erfinder: Meier, Hans-Jürgen, D-73431 Aalen (DE); Lipp, Ernst, D-73457 Essingen (DE); Knohl, Ernst-Dieter, D-89551 Königsbronn (DE); Bader, Jürgen, D-73432 Aalen-Ebnat (DE)

(57) **Zusammenfassung**

Die Erfindung betrifft eine Lagerung für ein um mindestens eine Achse relativ zu einer Grundplatte (4) bewegliches Bauteil. Erfindungsgemäß ist das Bauteil mit der Grundplatte (4) über hintereinandergeschaltete Gelenkketten (5,9,6,10) mit jeweils mindestens einem Gelenk (5,6) verbunden.

## Beschreibung

Die Erfindung betrifft eine Lagerung für ein um mindestens eine Achse relativ zu einer Grundplatte bewegliches Bauteil.

Derartige Lagerungen z.B. für Kippspiegel sind aus dem stand der Technik bekannt und werden für die verschiedensten Anwendungen benötigt (z.B. Scannen, schnelles Nachjustieren, usw.). Um einen Kippspiegel um zwei Achsen zu kippen, werden bekanntermaßen sphärische Kugel- oder Luftlager eingesetzt.

Insbesondere die Kugellager weisen eine so große Reibung auf, daß eine hochgenaue Positionierung nicht mehr möglich ist. Allgemein leiden die bekannten Lagerungen darunter, daß zu große Massen bewegt werden müssen, so daß sich eine hohe Dynamik nicht realisieren läßt. Weitere Nachteile des bekannten Standes der Technik sind, daß die Lagermitte nicht frei zugänglich ist und der technische Aufwand zur Realisierung als sehr hoch bezeichnet werden muß.

Es sind auch Antriebsvorrichtungen für ein um mindestens eine Achse relativ zu einen Drehpol winkelbegrenzt bewegliches Bauteil bekannt.

Derartige Antriebsvorrichtungen z.B. für Kippspiegel sind aus dem Stand der Technik bekannt und werden für die verschiedensten Anwendungen benötigt (z.B. Scannen, schnelles Nachjustieren, usw.).

So ist aus der DE-PS 12 13 141 eine Antriebsvorrichtung für einen Taumelspiegel bekannt, bei welcher der rotationssymmetrisch aufgehängte Planspiegel mit einem Dauermagneten verbunden ist, welcher in ein aus Magnetspulen aufgebautes Streufeld eintaucht. Dabei ist das Streufeld angenähert ein Drehfeld mit voneinander abhängig gesteuerten Spulen und zur Gewinnung des Steuersignals ist für die abhängige Steuerung der Spulen jeder Richtungskomponente des Drehfeldes eine Hilfsspule zugeordnet.

Diese Antriebsvorrichtung erlaubt nicht die freie, feste Einstellung eines Kippspiegels um einen Pol. Auf Grund des verwendeten elektromagnetischen Prinzips erhält man eine nichtlineare Kraft-Weg-Beziehung.

Eine weitere zu beachtende Problematik bei der Lagerung von bewegten Bauteilen ist die Steifigkeit der Lagerung.

Es ist die Aufgabe der Erfindung, eine achsenbewegliche Lagerung für ein Bauteil zu schaffen, welche eine hohe Dynamik der Kippbewegung zuläßt.

Diese Aufgabe wird erfindungsgemäß durch den kennzeichnenden Teil des ersten Patentanspruchs gelöst.

Durch die geschalteten Gelenkketten erhält man eine sehr kompakte Lagerung für das zu haltende Bauteil. Dies ist insbesondere der Fall, wenn die Gelenkketten aus zwei Gelenkketten mit jeweils vier Gelenken aufgebaut sind. Diese beiden Gelenkketten bestehen vorteilhafterweise aus zwei Zweigelenkketten, welche vorteilhafterweise in einer Ebene angeordnet sind.

Prinzipiell könnte die Lagerung auch aus z.B. drei Zweigelenkketten aufgebaut sein. Aus Gründen der leichteren, exakteren Ansteuerung der jeweiligen Kippkoordinaten ist aber die Aufteilung in zwei Gelenkketten mit jeweils vier Gelenken vorteilhaft.

Der exakten Ansteuerbarkeit der jeweiligen Kippkoordinaten wird auch durch senkrecht zueinander ausgerichtete Auslenkachsen der Gelenke gefördert. Außerdem erhält man dadurch eine kardanische Lagerung des optischen Bauteils. Damit das optische Bauteil einen stabilen, feststehenden Punkt besitzt, ist es vorteilhaft, wenn sich die Drehachsen in einem gemeinsamen Drehpol treffen, welcher vorteilhafterweise auf der oberen Oberfläche des optischen Bauteils liegen sollte.

Je nach Anwendung ist es sehr vorteilhaft, wenn zwischen den Gelenkketten ein kegelstumpfförmiger Freiraum unter dem Mittelpunkt des optischen Bauteils ist. Da das optische Bauteil z.B. eine Linse sein kann, wird so eine Weiterführung der optischen Achse unter die Grundplatte ermöglicht, welche aus diesem Grund dann eine entsprechende Öffnung, welche vorteilhafterweise auch als Blende verwendet werden kann, besitzt. Ist das optische Bauteil hingegen z.B. ein Spiegel, oder wird die durch das optische Bauteil dringende Strahlung durch ein weiteres optisches Bauteil mit einem oder mehreren Bestandteilen seitlich abgelenkt, so ist es möglich, in diesem Freiraum eine Verstelleinrichtung für die Lagerung einzubauen. Diese Verstelleinrichtung kann vorteilhafterweise ein Antrieb sein. Insbesondere wenn man als Antrieb einen elektromagnetischen nimmt, erhält man einen hohen Dynamikbereich. Um thermische Probleme zu vermeiden, sollte dabei die möglicherweise entstehende Abwärme des Antriebs seitlich oder nach unten weg vom optischen Bauteil oder aus dessen Strahlengang weggeführt werden. Ist das optische Bauteil z.B. ein Spiegel, so kann man seitlich des Spiegels Luft ansaugen und nach unten wegsaugen.

Eine besonders stabile Lagerung erhält man, wenn die Gelenkketten über mindestens einen Verbindungskörper miteinander verbunden sind. Dieser Verbindungskörper sollte dabei vorteilhafterweise so stabil ausgeführt sein, daß er selber im Dynamikbereich der Lagerung nur unwesentlich eine Eigenschwingung aufweist.

Verwendet man in den Gelenkketten Festkörpergelenke, so erhält man eine reibungsarme, spielfreie sowie hysteresefreie Auslenkung auf den Drehachsen.

Jedes Gelenk der Gelenkketten sollte nur eine Drehachse besitzen, damit die Lagerung eine hohe Stabilität besitzt.

Die Gelenkketten sollten am optischen Bauteil seitlich befestigt sein, damit der Bereich unterhalb des optischen Bauteils anderweitig genutzt werden kann (z.B. für Linsen anders als z.B. für Spiegel). Seitlich bedeutet bei dieser Anordnung, daß die zentrale Mitte unterhalb des optischen Bauteils frei ist. Dies ist z.B. auch dann der Fall, wenn die Befestigung unterhalb eines runden optischen Bauteils am äußeren Kreisumfang erfolgt. Unter seitlich ist hier somit nicht zu verstehen, daß die Befestigung nur seitlich des optischen Bauteiles erfolgen darf.

Durch die erfindungsgemäße Lagerung erhält man für kleine Kippwinkel eine sphärische Bewegung des optischen Bauteils. Die Massenträgheitsmomente werden für beide Kippachsen auf gleiche Werte abgestimmt.

Die wesentlichen Vorteile der Erfindung lassen sich wie folgt kurz zusammenfassen:
- Zweigelenkketten bauen sehr kompakt;
- die Lagermitte ist frei und kann z.B. für einen Spiegel für einen Antrieb, vorzugsweise einen elektromagnetischen, verwendet werden;
- die Festkörpergelenke vermeiden jegliche Art von Reibung;
- exakte sphärische Führung des optischen Bauteils durch die Lagerung um einen gemeinsamen Punkt (Momentanpol);
- minimale Massenträgheitsmomente;
- geringer Leistungsbedarf;
- hohe realisierbare Dynamik;
- minimale thermische Belastung des optischen Bauteils, wenn die Verlustwärme vom optischen Bauteil abgeführt wird; und
- hohe Einstellgenauigkeit der jeweiligen Kipposition bei hoher Reproduzierbarkeit (bei niedrigen Frequenzen haben Versuche zu einer Einstellgenauigkeit von 1 bis 1,5 Bogensekunden erbracht; bei höheren Frequenzen (Dynamik) von 400 Hz lag die Einstellgenauigkeit bei den Versuchen bei ungefähr einer Bogenminute).

Die erfindungsgemäße Lagerung kann vorteilhafter Weise mit einer zweiachsenbeweglichen Antriebsvorrichtung für ein Bauteil betrieben werden, welche eine hohe Dynamik der Kippbewegung mit frei festlegbaren Kippachsen zulassen und eine zumindest fast lineare Kraft-Weg-Beziehung besitzen.

Erstmals wird hier eine derartige Antriebsvorrichtung realisiert, welche eine (zumindest fast) lineare Kraft-Weg-Beziehung für ein uns mindestens eine Achse relativ zu einem Drehpol winkelbegrenzt bewegliches Bauteil liefert.

Erfindungsgemäß wird dies dadurch erreicht, daß die Antriebsvorrichtung aus Elementen aufgebaut ist, welche nach dem elektromotorischen, vorzugsweise nach dem linearmotorischen Prinzip arbeiten.

Dabei sollte der mit der Basis fest verbundene Stator eine zentrale Öffnung im oberen Teil besitzen, durch welche eine axiale Halterung zum zu bewegenden Teil führt. Durch diese zentrale Öffnung ist es möglich, den Motor direkt unterhalb des Drehpols anzuordnen. Außerdem kann die Öffnung als mechanische Anschlagsicherung dienen, welche einen zu großen Winkelausschlag des zu bewegenden Bauteils verhindert.

Damit sich der Luftspalt zwischen den Spulen und den Magneten nicht ändert (und somit die zu übertragende Kraft), sollten alle Flächen auf dem Anker und im Stator sphärisch gestaltet sein, wobei der Mittelpunkt aller Sphären im Drehpol liegen sollte.

Es reicht eine Spule auf dem Anker aus, um eine lineare Bewegung des Spiegels um den Drehpol auf einer sphärischen Fläche zu erreichen. Exakter wird diese Bewegung, wenn man dafür zwei Spulen auf dem Anker vorsieht, wobei diese Spulen auf einer Linie durch den Ankermittelpunkt angeordnet sind.

Will man eine zweidimensionale Bewegung des Spiegels auf einer sphärischen Fläche erreichen, so nimmt man vorteilhafter vier kreuzweise angeordnete Spulen.

Zwischen den Magneten einer Statorschale sollte jeweils mindestens ein Pol angeordnet sein, damit man einen sauberen Verlauf der Magnetfeldlinien bekommt, ohne zu große Streufelder zu erzeugen. Hat man obere und untere Magnete auf den beiden Statorschalen, so kann man die auf den Anker zu übertragende Kraft verdoppeln. Für einen sauberen Verlauf der Magnetfeldlinien ist es auch vorteilhaft, wenn die Abmessungen der sich gegenüberliegenden Oberflächen von den Magneten und Spulen aufeinander angepaßt sind.

Bringt man an der Ankerhalterung ein einstellbares federndes Element an, so kann man die statische Verlustleistung bei einem Schrägbetrieb der Anordnung jeweils minimieren, da dann das federnde Element das Gewicht des Ankers auffängt und ihn im stromlosen Zustand in einer zentralen Ausgangslage hält.

Die Antriebsvorrichtung sollte mit Sensoren zur Ermittlung der Kipplage über einen Positionsregelkreis verbunden sein, welcher vorteilhafterweise aus dynamischen Gründen analog ausgeführt ist. Zudem kann man dann über eine Rechenanlage eine gewünschte Kipplage der Ansteuerungseinrichtung, welche den Betriebsstrom für die Spulen liefert, mitteilen.

Vorteilhafterweise verbindet man das zu bewegende Bauteil mit einer Grundplatte über ein axial steifes Gelenk. Dabei sollte dieses steife Gelenk das zu bewegende Bauteil zentral abstützen, damit eine achsiale Bewegung des zu bewegenden Bauteils verhindert wird. Eine möglichst ungestörte Bewegung des zu bewegenden Bauteils erhält man, wenn man alle Gelenke so anordnet, daß sich ihre Wirkungslinien in der Ruhelage in der gewünschten Drehachse des Spiegels treffen.

Vorteilhafterweise ist die zentrale Abstützung durch das achsiale Gelenk möglichst weit außerhalb der Spiegelnormalen angeordnet, wenn das zu bewegende Bauteil ein Spiegel ist.

Bei einer zweiachsigen Bewegung des zu bewegenden Bauteils ist es vorteilhaft, wenn die zentrale Abstützung durch zwei Gelenke bewirkt wird.

Ist das die zentrale Abstützung bewirkende Gelenk aus einer Blattfeder, so erhält man eine reibungs- und hysteresefreie Lagerung. Dies ist auch durch Kreuzfedergelenke oder Biegefedern möglich. Schlecht hingegen wäre eine Lagerung durch Kugellager.

Die erfindungsgemäße Lagerung ist ideal geeignet für System mit Massenausgleich durch analog aufgebaute Systeme.

Vorteilhafterweise ist das axial steife Gelenk, welches die zentrale Abstützung bewirkt, aus einer Blattfeder mit einem zentralen Versteifungsglied aufgebaut.

Die Kippung wird vorteilhafterweise durch einen Linearmotor bewirkt, welcher die Kippung des zu bewegenden Bauteils in einer Achse veranlaßt.

Für verschiedene Anwendungen kann es vorteilhaft sein, wenn die Lagerung des zu bewegenden Bauteils zweiachsig ist.

Die Erfindung wird nachstehend in beispielhafterweise anhand von Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen
- Fig. 1: eine erste seitliche Aufschnittzeichnung eines Kippspiegels in einer erfindungsgemäßen Spiegellagerung;
- Fig. 2: eine Aufschnittzeichnung von Figur 1 um 90° gedreht;
- Fig. 3: eine Aufsicht auf die in Figur 1 und 2 dargestellte Spiegellagerung für einen Kippspiegel; und
- Fig. 4a-c: eine Dreiseitenansicht eines Festkörpergelenks.
- Fig. 5: eine Explosionszeichnung der erfindungsgemäßen Antriebsvorrichtung;
- Fig. 6: einen Schnitt durch die zusammengebaute Antriebsvorrichtung aus Figur 1 für eine Kippachse;
- Fig. 7: eine erfindungsgemäße Spiegellagerung mit axialer Versteifung im Schnitt;
- Fig. 7a: eine seitliche Ansicht der Spiegellagerung aus Figur 7;
- Fig. 8: eine zweite Spiegellagerung mit axialer Versteifung;
- Fig. 8a: einen ersten Schnitt durch die Spiegellagerung aus Figur 8;
- Fig. 8b: einen zweiten Schnitt durch die Spiegellagerung aus Figur 8;
- Fig. 9a: die Spiegellagerung aus den Figuren 8, 8a und 8b mit Linearmotorantrieb; und
- Fig. 9b: die Spiegellagerung aus Figur 9a in einem anderen Schnitt.

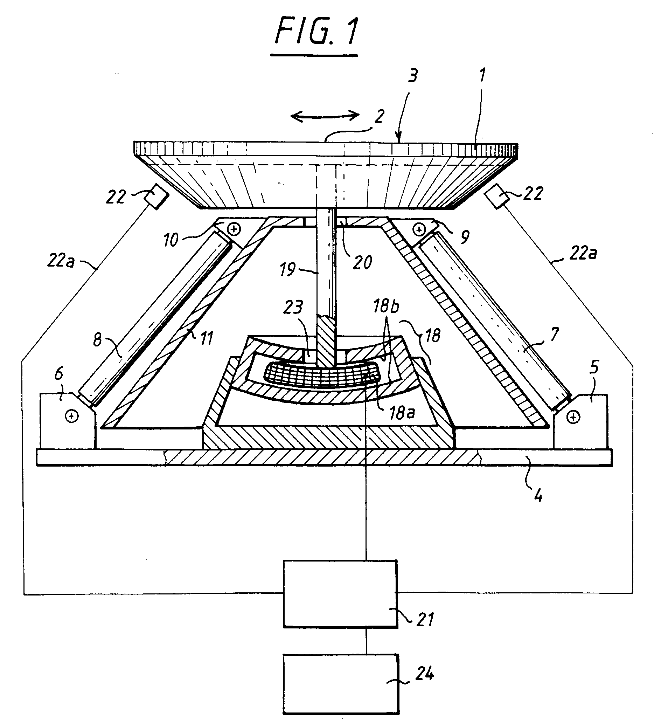

Der in den Figuren 1-3 dargestellte Kippspiegel (1) in seiner Spiegellagerung ist kardanisch so gelagert, daß er sich frei um zwei Achsen drehen kann, wobei beide Drehachsen einen gemeinsamen Drehpol (2) in der Spiegeloberfläche (3) besitzen.

Der Kippspiegel (1) kann sich relativ zu einer Grundplatte (4) in zwei Achsen bewegen. Die Spiegellagerung selber besteht aus zwei mit der Grundplatte (4) verbundenen Gelenken (5, 6) an jeweils einem Stab (7, 8), welche an ihren anderen Enden über zwei weitere Gelenke (9, 10) an einem Kegelstumpfkörper (11) befestigt sind und aus zwei weiteren mit dem Kegelstumpfkörper (11) befestigten Gelenken (12, 13) an jeweils einem Stab (14, 15), welche an ihren anderen Enden über zwei weitere Gelenke (16, 17) an dem Kippspiegel (1) befestigt sind. Durch diese acht Gelenke (5, 6, 9, 10, 12, 13, 16, 17) an den vier Stäben (7, 8, 14, 15) ist der Kippspiegel (1) somit kardanisch mit der Grundplatte (4) verbunden.

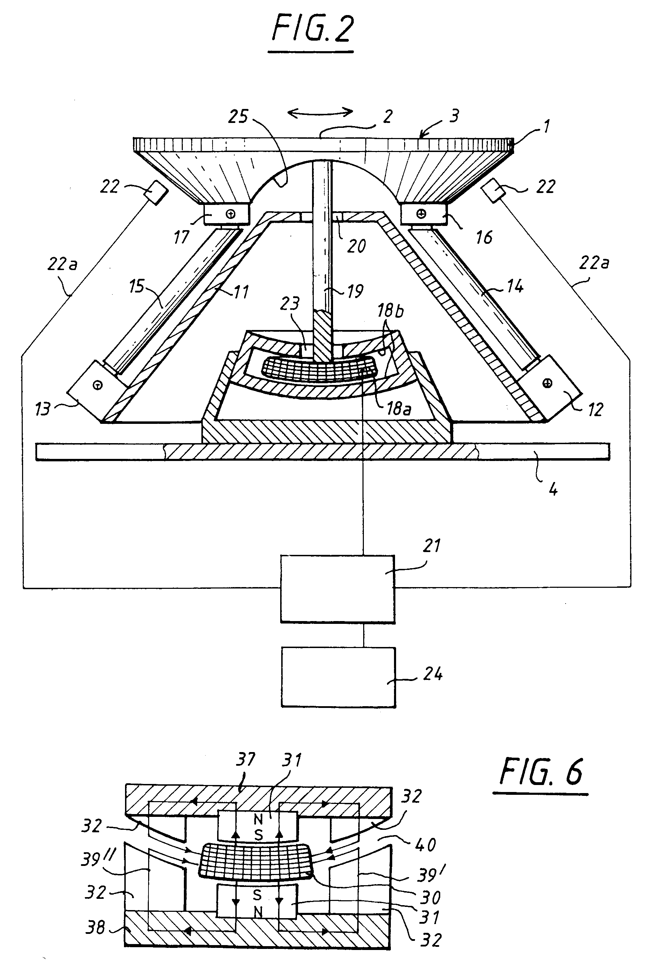

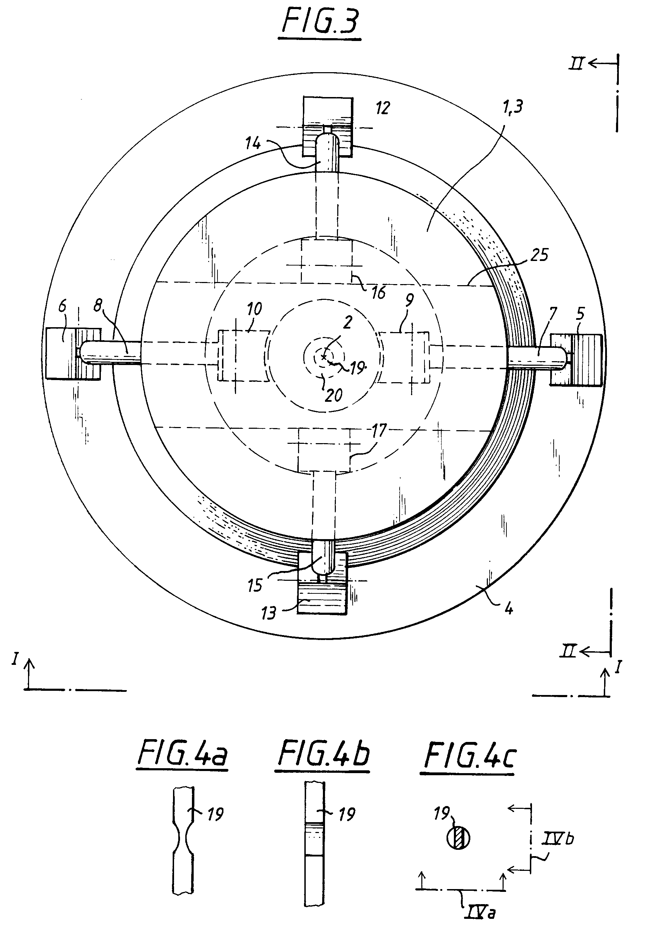

Da sich der Kegelstumpfkörper (11) bei der Bewegung in einer Achse mitbewegt (siehe (Fig. 2), besitzt der Spiegel (1) eine innere Ausnehmung (25). Diese innere Ausnehmung (25) sorgt dafür, daß die Massenträgheitsmomente in den beiden Kippachsen gleich (d.h. abgeglichen) sind. Dies bedeutet für den Kegelstumpfkörper (11) andererseits, daß seine Masse möglichst gering sein sollte, damit der Spiegel (1) nicht zu massiv ausgelegt werden muß.

Die Gelenke (5, 6, 9, 10, 12, 13, 16, 17) sind in den Figuren 1-3 nur schematisch dargestellt. Die für die Erfindung brauchbaren Gelenke (5, 6, 9, 10, 12, 13, 16, 17) zeichnen sich dadurch aus, daß sie eine Kippbewegung im wesentlichen nur in einer Achse zulassen. Die beiden gewünschten Kippachsen sind dabei durch eine Verbindungsgerade durch die beiden Viergelenkketten (6, 10, 9, 5, 13, 17, 16, 12) gegeben. Wenngleich die Erfindung alle diese Merkmale aufweisenden Gelenke verwenden kann, d.h. alle einachsigen Gelenke, so ist eine höchste Präzision der Kippbewegung des Kippspiegels (1) am einfachsten mit Festkörpergelenken zu realisieren, da diese reibungsarm, spielfrei sowie hysteresefrei sind. Festkörpergelenke sind beispielhaft in den Figuren 4a-c dargestellt. Es handelt sich bei ihnen im wesentlichen um Stäbe mit beliebigem Querschnitt, welchen beidseitig einer Achse, der Drehachse verjüngt sind (d.h. Material abgetragen wurde). Dadurch entsteht zwischen dem oberen und dem unteren Stabteil ein Teil mit weniger Material, bei welchem sich das verbleibende Material um die Drehachse konzentriert. Durch diesen verdünnten Bereich erhält der Stab eine Drehachse, in welcher er gegenüber angreifenden Kräften sehr viel nachgiebiger ist als in allen anderen Richtungen.

Durch die Benutzung von Festkörpergelenken (5, 6, 9, 10, 12, 13, 16, 17) kann die gesamte Spiegellagerung monolithisch hergestellt werden, wobei der Bereich unterhalb des Kippspiegels (1) frei für weitere Nutzungsmöglichkeiten bleibt. In diesem Bereich unterhalb des Kippspiegels (1) ist eine Verstelleinrichtung (18) untergebracht, welche über ein stabförmiges Verbindungselement (19) mit dem Kippspiegel (1) verbunden ist. Um eine freie Kippbewegung des Kippspiegels (1) in zwei Achsen zu ermöglichen, besitzt der Kegelstumpfkörper (11) unterhalb des Kippspiegels (1) eine kreisförmige Öffnung (20).

An dem Ende des Verbindungselementes (19), an welchem dieses nicht mit dem Kippspiegel (1) verbunden ist, ist ein Elektromotor als Verstelleinrichtung (18) angebracht. Dabei ist der Anker (18a) fest mit dem Verbindungselement (19) verbunden und wirkt direkt auf den Kippspiegel (1). Um den Anker (18a) herum ist der Stator (18b) angeordnet.

Der Anker (18a) besteht im wesentlichen aus Weicheisen (z.B. Wacuflux) und ist kreisförmig mit einer konvexen oberen Begrenzungsfläche und einer konkaven unteren Begrenzungsfläche, wobei der Kugelmittelpunkt der beiden sphärischen Flächen mit dem Drehpol (2) des Kippspiegels (1) zusammenfällt. Der Stator (18b) besitzt dazu korrespondierende Flächen mit einem jeweils etwas anderem Radius, so daß der obere und untere Abstand zwischen Anker (18a) und Stator (18b) immer konstant bleibt. Um eine freie Bewegung des Ankers (18a) im Stator (18b) sicherzustellen, besitzt der Stator (18b) eine kreisförmige Öffnung (23), durch welche das Verbindungselement (19) zum Kippspiegel (1) geführt ist.

Die zwei Spulenpaare (30', 30'') einer Achse auf dem Anker (18a) können über eine Recheneinheit (21) separat angesteuert werden, wobei die Korrektheit der Spiegelneigung des Kippspiegels (1) von distanzmessenden Sensoren (22) kontinuierlich gemessen wird. Die Sensoren (22) geben ihr Meßergebnis laufend über eine Signalleitung (22a) an die Recheneinheit (21) weiter, welche die ausgehenden Ansteuersignale an den Anker (18a) so permanent korrigieren kann. Über eine Tastatur (24), welche mit der Recheneinheit verbunden ist, kann jede beliebige Stellung des Kippspiegels (1) im Rahmen der systemzulässigen Kippwinkel eingestellt werden. Die zulässigen Kippwinkel sind dabei allein durch die konstruktive Auslegung der Spiegellagerung und ihrer Elemente sowie durch die, dieser Auslegung angepaßte konstruktive Auslegung der Verstelleinrichtung (18).

Wenngleich bei diesem Anwendungsbeispiel die Spulen der Verstelleinrichtung (18) im Anker (18a) angeordnet sind, sind Anwendungen denkbar, in welchen die Spulen auch im Stator (18b) angeordnet sein können.

Um einen größeren Kippwinkel in beiden Achsen zu erhalten, kann der Kegelstumpfkörper (11) auch aus Streben zwischen den Gelenken (9, 10, 12, 13) bestehen, wobei dann aber die Biegeeigenschaften dieser Streben berücksichtigt werden müssen, um noch eine genaue Einstellung der Spiegelkippachsen insbesondere bei einer hohen Dynamik zu gewährleisten.

Wenn die Einstellgenauigkeit des Kippspiegels (1) nicht so kritisch ist, können die Gelenke (5, 6, 9, 10, 12, 13, 16, 17) auch durch andere, einachsige Gelenke realisiert werden.

Ein bevorzugtes Anwendungsgebiet für die Lagerung ist insbesondere bei Scannern zu sehen, aber auch bei Sekundärspiegeln von astronomischen Teleskopen.

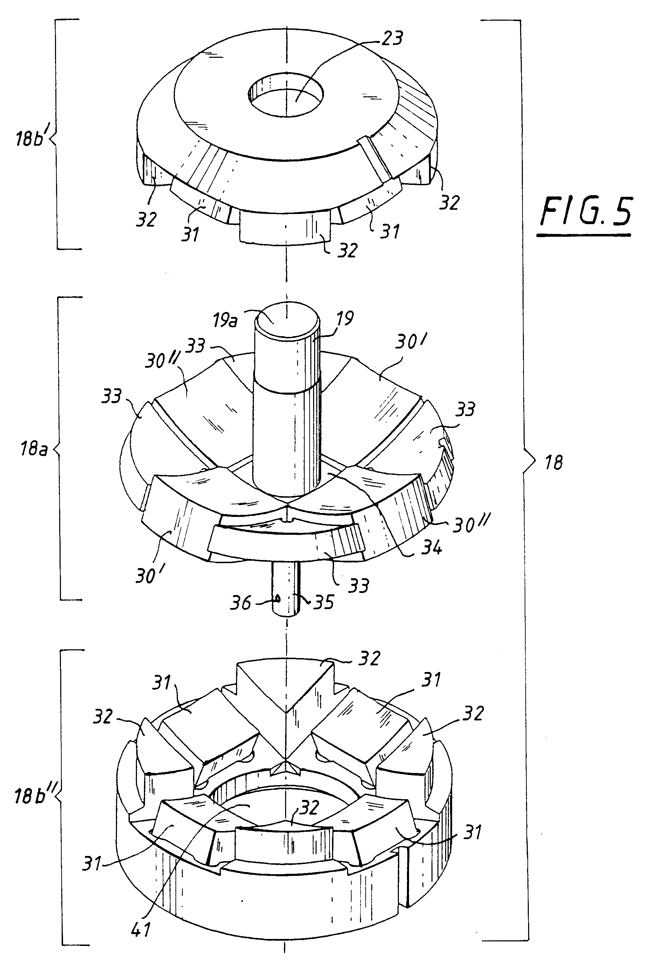

In der Fig 5 ist nun in einer Explosionszeichnung die erfindungsgemäße Antriebsvorrichtung (18) detailliert dargestellt. Anhand der Fig. 6 wird dann das Wirkprinzip der Antriebsvorrichtung (18) näher erläutert.

Die kreisförmige Öffnung (23) im oberen Statorteil (18b') dient auch als mechanischer Anschlag für den Anker (18a), um dessen Winkelauslenkung zu begrenzen.

Auf den beiden Statorscheiben (18b', 18b'') sind jeweils vier Magnete (31) (z.B. aus Neodym) und vier Pole (32) angeordnet. Die Verwendung von Magneten (31) aus Neodym hat den Vorteil, daß man einen sehr geradlinigen Feldaustritt mit einem geringen Streufeld erhält. Die Magnete (31) sind im wesentlichen als Rechteckkörper mit einer sphärischen Oberfläche in Richtung Anker (18a) ausgeführt. Die Pole (32) sind im wesentlichen als Dreieckskörper mit einer sphärischen Oberfläche in Richtung Anker (18a) ausgeführt.

Die Spulen (30', 30'') auf dem Anker (18a) sind im wesentlichen als Rechteckkörper mit einer sphärischen Oberfläche in Richtung der beiden Statorteile (18', 18b'') ausgeführt. Zwischen den Spulen (30) befinden sich 90° Kreissegmentkörper (33) aus Weicheisen. Die im Inneren des Ankers (18a) so entstehende Freifläche (34) ist massiv ausgeführt und dient zur Befestigung des Verbindungselementes (19). Auf der oberen Oberfläche (19a) des kreisrunden Verbindungselementes (19) ist der Spiegel (1) befestigt. Die Spulen (30) haben eine lineare Wicklung. Dadurch, daß sie sich zwischen einem oberen und einem unteren Magneten (31) angeordnet sind, erhält man bei relativ wenigen Wicklungen eine hohe Schubkraft pro Volumen.

Der Drehpol (2) der Antriebsvorrichtung und des auf ihm angebrachten Spiegels (1) liegt bei der erfindungsgemäßen Antriebseinrichtung im Mittelpunkt (2) auf der Oberfläche (3) des Spiegels (1), welches hier das durch die Antriebseinrichtung bewegte Bauteil darstellt. Dieser Spiegel (1) wird auch als Kippspiegel bezeichnet.

Die Spulen (30) sind rechteckförmig und zwischen ihnen ist jeweils ein Weicheisenteil (33) angeordnet ist, wobei dieses Weicheisenteil (33) in Aufsicht im wesentlichen die Form eines Kreisausschnitts von 90° aufweist. Die Spulen (30) sind dabei Teil einer ersten Kugelschale und die Weicheisenteile (33) Teil einer zweiten Kugelschale, wobei eine sphärische Verlängerung der zweiten Kugelschale im Inneren der zweiten Kugelschale verläufen würde.

Die Pole (32) auf den beiden Statorteilen (18b', 18b'') sind auch Teil einer Kugelschale als auch die Magnete (31) auf den beiden Statorteilen (18b', 18b''), wobei die räumliche Ausdehnung in Richtung Anker (18a) der Kugelschale Magnete (33) kleiner ist als die räumliche Ausdehnung in Richtung Anker (18a) der Kugelschale der Pole (32).

Das untere Statorteil (18'') besitzt auch eine kreisrunde zentrale Öffnung (41), durch welche im zusammengebauten Zustand eine untere Verlängerung (36) des Verbindungselementes (19) aus der Antriebsvorrichtung hinausragt und durch welche die Anschlußdrähte zu den Spulen (30', 30'') hindurchgeführt werden.

An dieser unteren Verlängerung (35) befindet sich eine Halterung (36) für eine einstellbare Feder (in der Fig. nicht dargestellt). Diese einstellbare Feder nimmt das Gewicht des Ankers (18a) auf, wenn dieser nicht horizontal betrieben wird. Dies senkt die statische Verlustleistung und verringert die Leistungsaufnahme, wenn die Antriebsvorrichtung in Betrieb genommen wird.

Wie aus Figur 6 deutlich wird, arbeitet die Antriebsvorrichtung nach dem elektromotorischen Prinzip und besitzt eine lineare Kraft-Strom-Beziehung, jedenfalls in dem begrenzten Verstellbereich der Antriebsvorrichtung von < 3°.

Der Abstand zwischen den Spulen (30) und den Magneten (31) ist relativ gering, so daß man eine hohe Luftspaltinduktion erhält (^{∼} 1/2 T, wenn die Feldstärke der Dauermagnete (31) 1T beträgt und die effektive Leistungsaufnahme pro Wicklung bei rund 1,5 W bei maximalem Spitzenwert von rund 4A (Sinusansteuerung) liegt). Die Größe des Luftspalts zwischen der Spule (30) und den Magneten (31) sowie zwischen den Polen (32) und den Ankersegmenten (33) beträgt dabei rund zweizehntel Millimeter. Dies erzeugt eine Schubkraft von rund 1N bei einem Kippspiegel (1) von 36 mm Durchmesser.

Der Luftspalt zwischen den Dauermagneten (31) und den Polen (32) sollte dabei wesentlich größer sein als der Luftspalt (40) zwischen den Polen (32) der oberen und unteren Statorteils (18b', 18b''). Die Gehäuseteile (37, 38) des oberen und unteren Statorteils (18b', 18b'') sind beide auch aus Weicheisen.

Der Verlauf der Feldlinien (39', 39'') ist in der Figur 6 eingezeichnet. Die oberen und unteren Feldlinien (39', 39'') sind für jede Spule (30) des Ankers (30) geschlossen. Da die Feldlinien (39', 39'') jeweils in der Spule (30) beginnen und senkrecht auf die angrenzenden Pole (33) stoßen, (d.h. über die Pole (33) verlaufen), erfolgt bei dem Betrieb einer Spule (30') keine Induktion in die zur Spule (30') senkrecht ausgerichteten Spulen (30''). Die Wicklungen aller Spulen (30) sind im wesentlichen zu einer zentralen Linie durch den Ankermittelpunkt parallel verschoben ausgerichtet, wobei die zentralen Linie die Mittelpunkte zweier sich gegenüberliegenden Spulen (30) miteinander verbindet.

Letztendlich erhält man durch die vorab beschriebene Antriebsvorrichtung einen zweidimensional arbeitenden sphärisch Linearantrieb, welcher einen Antrieb auf einer Kugelschale in einem begrenzten Winkelbereich liefert. Der Drehpunkt, welcher mit dem Mittelpunkt dieser Kugelschale zusammenfällt, kann frei gewählt werden und liegt in dem hier beschriebenen Beispiel auf der Mitte (2) der Oberfläche (3) des Spiegels (1).

Die Antriebseinrichtung zeichnet sich durch eine nicht meßbare Achskopplung (Einfluß von einer Achsbewegung auf die dazu senkrecht stehende Achsbewegung) aus und erzeugt nur Drehmomente um den Achsen-Drehpunkt, wodurch die Achsenlagerung nur geringstmögliche Kräfte aufnehmen muß.

Durch die erfindungsgemäße Antriebsvorrichtung ist es möglich, das Bauvolumen der Antriebsvorrichtung inklusive Achslagerung auf den Durchmesser des Spiegels (1) zu begrenzen.

Bei einem realisierten Prototyp wurde ein Kippwinkel von 0 bis ± 1° und eine Bandbreite (Frequenzgang) von 0 - 100 Hz bei max. Amplitude bzw. 400 Hz bei reduzierter Amplitude bis zu 1,5 arcmin erreicht.

Wegen der hohen Dynamik (Bandbreite) und des relativ großen Kippwinkels ist ein sehr hohes Drehmoment-Volumen-Verhältnis erforderlich, welches die erfindungsgemäße Antriebsvorrichtung aufweist.

Die erfindungsgemäße Antriebsvorrichtung führt erstmals das elektromotorische Prinzip für einen Kippspiegel (1) ein. Dabei wird das Prinzip des Linearmotors verwendet und dieser entsprechend umkonstruiert, so daß der "Linearmotor" nun einen Antrieb auf einer zweidimensionalen, sphärischen Fläche liefert. Man erhält so ein lineares Verhältnis von Strom zur Schubkraft über den möglichen Verstellweg.

Die sphärische Gestaltung des Antriebes ermöglicht eine gering mechanische Achskopplung und ein Drehmoment nur um den Kippmittelpunkt des Spiegels (1). Der Luftspalt zwischen Stator (18b', 18'') und Anker (18a) verändert sich bei Kippung nicht. Die Antriebskräfte wirken dadurch nur tangential. Kräfte, die senkrecht auf den Drehpunkt wirken und die Lager zusätzlich belasten, sind minimal. Der Luftspalt kann minimisiert werden, wodurch eine hohe Luftspaltinduktion erzielt wird. Eine hohe Luftspaltinduktion ist aber Voraussetzung für ein günstiges Kraft- bzw. Drehmoment-Volumen-Verhältnis.

Die erfindungsgemäße Antriebsvorrichtung besitzt selbst eine sphärische Gestalt der wesentlichen Antriebsteile, wobei weder eine magnetische noch eine elektromagnetische (Induktion) Achskopplung stattfindet.

Wenngleich bei dem vorab beschriebenen Anwendungsbeispiel die Spulen (30) der Antriebsvorrichtung (18) im Anker (18a) angeordnet sind, sind Anwendungen denkbar, in welchen die Spulen auch im Stator (18b', 18b'') angeordnet sein können.

Um einen größeren Kippwinkel in beiden Achsen zu erhalten, kann der Kegelstumpfkörper (11) auch als Streben zwischen den Gelenken (9, 10, 12, 13) bestehen, wobei dann aber die Biegeeigenschaften dieser Streben berücksichtigt werden müssen, um noch eine genaue Einstellung der Spiegelkippachsen insbesondere bei einer hohen Dynamik zu gewährleisten.

Wenn die Einstellgenauigkeit des Kippspiegels (1) nicht so kritisch ist, können die Gelenke (5, 6, 9, 10, 12, 13, 16, 17) auch durch andere, einachsige Gelenke realisiert werden.

Ein bevorzugtes Anwendungsgebiet für die Antriebsvorrichtung ist insbesondere bei Scannern zu sehen, aber auch bei Sekundärspiegeln von astronomischen Teleskopen.

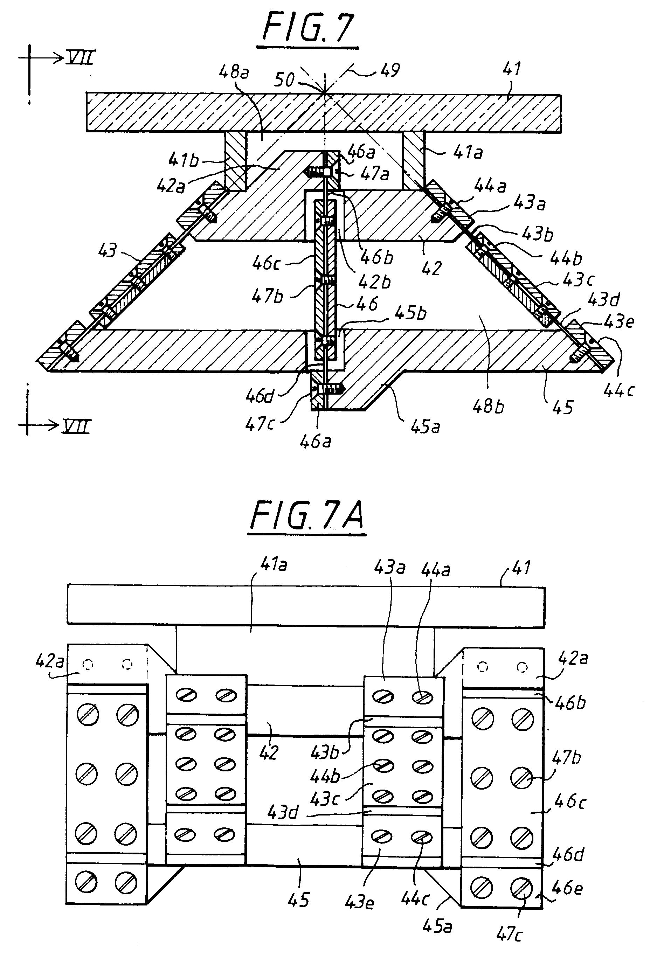

Die in Figur 7 und 7a dargestellte Lagerung für ein bewegliches Bauteil (41, 42) besitzt vier Gelenkketten (43), mit welchem das zu bewegende Bauteil (41, 42) mit einer Grundplatte (45) verbunden ist. Dabei sind die Gelenkketten (43) kreuzförmig angeordnet, so daß sich jeweils zwei Gelenkketten (43) gegenüberliegen.

Jede dieser Gelenkketten (43), welche seitlich angeordnet sind, besteht aus einer Blattfeder (46f), welche mit einem oberen Befestigungsteil (43a) an dem zu bewegenden Bauteil (42) befestigt ist und aus einem unteren Befestigungsteil (43e), mit welchem die Gelenkkette (43) an der Grundplatte (45) befestigt ist.

Die beiden Befestigungsteile (43a, 43e) spannen die Blattfeder (43f) zwischen dem oberen zu bewegenden Bauteil (42) und der Grundplatte (45) fest.

In der Mitte weist die Gelenkkette (43) ein Verstärkungsteil (43c) auf, welches zu dem oberen und unteren Befestigungsteil (43a, 43e) jeweils einen gewissen Abstand hat. Dadurch bildet sich eine obere und eine untere elastische Biegezone (43b und 43d) aus, welche für eine gelenkige Lagerung des zu bewegenden Bauteils (42) relativ zur Grundplatte (45) sorgt.

Das obere Befestigungsteil (43a) sowie das untere Befestigungsteil (43e) sind jeweils über Schrauben (44a, 44c) mit dem oberen Bauteil (42) bzw. der Grundplatte (45) verbunden. Das Versteifungsteil (43c) ist mit Schrauben (44b) an der Blattfeder (43f) befestigt.

Auf dem zu bewegenden Bauteil (42) ist ein Spiegel (41) gelagert, welcher zu dem bewegten Bauteil (42) einen gewissen Abstand hat. Dieser Abstand wird durch Verstrebungen (41a, 41b) sichergestellt. Dadurch bildet sich zwischen dem Spiegel (41) und dem zu bewegenden Bauteil (42) ein Hohlraum (48a) aus.

Innerhalb dieses Hohlraumes (48a) besitzt das zu bewegende Bauteil (42) eine Befestigungseinrichtung (42a) für eine axial steife Gelenkkette (46). Unterhalb der Befestigungseinrichtung (42a) befindet sich in dem zu bewegenden Bauteil (42) eine Aussparung (42b).

An der Befestigungseinrichtung (42a) ist eine Blattfeder (46f) über ein oberes Befestigungsteil (46a) befestigt. Diese Blattfeder (46f) ist mit der Grundplatte über ein unteres Befestigungsteil (46e) an einer entsprechend ausgeformten Befestigungseinrichtung (45a) befestigt. Oberhalb dieser Befestigungseinrichtung (45a) besitzt die Grundplatte (45) eine Aussparung (45b), um eine ungestörte Bewegung der Blattfeder (46f) sicher zu stellen.

Im mittleren Teil der Blattfeder (46f) ist ein Versteifungsteil (46c) mit Schrauben (47b) angebracht. Die achsiale Gelenkkette (46) erstreckt sich in dem Hohlraum (48b), welcher zwischen dem zu bewegenden Bauteil (42) und dem Spiegel (41) ausgebildet ist. Die Wirkungslinien (49) der Gelenkketten (43, 46) treffen sich auf der Oberfläche des Spiegels (41) alle in einem Punkt (50), welcher auch als Drehpunkt für den Spiegel (41) dient.

Durch die achsial steife Gelenkkette (46) wird der Spiegel (41) zentral ein drittes Mal abgestützt. Alle drei Wirkungslinien (49) der Gelenkarme (43, 46) treffen sich in der Ruhelage im gewünschten Drehpunkt (50) des Spiegels (41), durch welchen die möglichen Drehachsen des Spiegels (41) verlaufen. Gerade diese dritte Abstützung (46) ergibt eine gewünschte hohe achsiale Steifigkeit.

Da eine zwangsfreie Lage nur in der Nullposition vorliegt, sollten die zentralen Gelenkarme (46) weit außerhalb der Spiegelnormalen angeordnet werden, damit eine Überlastung der Gelenkarme (46) vermieden wird. Diese Überlastung könnte durch die Nachgiebigkeit der Grundplatte (45) und des zu bewegenden Bauteils (42) entstehen.

Selbstverständlich müssen die Gelenkarme (43, 46) nicht wie im Beispiel verschraubt sein. Sie können auch monolitisch hergestellt werden und sogar integral mit einem oder mehreren anderen Bauteilen als Kombination gefertigt sein.

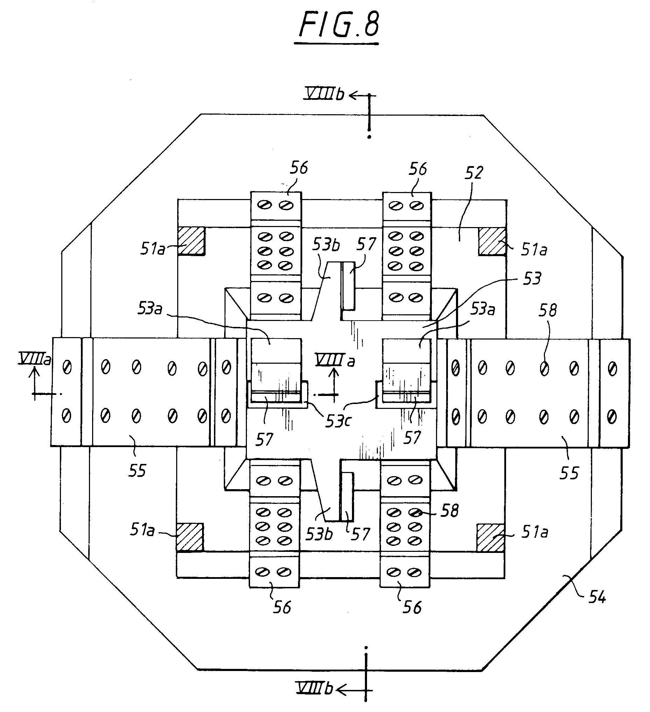

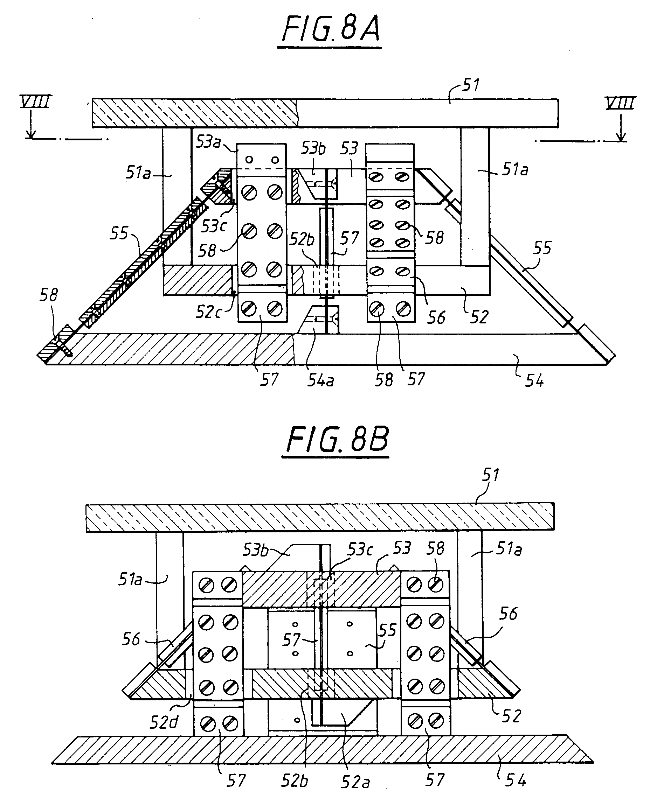

Für einen zweiachsig gelagerten Spiegel (51) kann die gleiche Anordnung in einer zweiten Stufe zur Anwendung kommen, welche um 90° zur ersten verdreht wird. In diesem Fall wird der Spiegel (51) nicht an der Zwischenplatte (53) befestigt, sondern erst an der zweiten Platte (52). Dies ist in den Figuren 8, 8a und 8b dargestellt.

Bei der in den Figuren 8, 8a und 8b dargestellten Spiegellagerung wird ein Spiegel (51) über Verstrebungen (51a) auf einem zu bewegenden Bauteil (52) gelagert. Das zu bewegende Bauteil (52) befindet sich zwischen einer Grundplatte (54) und einer Zwischenplatte (53).

Das zu bewegende Bauteil (52) ist über eine erste seitliche Gelenkkette (55) mit der Grundplatte (54) verbunden. Mit der Zwischenplatte (53) ist das zu bewegende Bauteil (52) über eine zweite seitlich angeordnete Gelenkkette (56) verbunden.

Alle in dieser Figur beschriebenen Gelenkketten (55, 56, 57) sind entsprechend den Gelenkketten aus deren Figuren 7 und 7a aufgebaut.

An der Zwischenplatte (53) sind Befestigungseinrichtungen (53a, 53b) angebracht, an welchen jeweils eine axial steife Gelenkkette (57) befestigt ist.

Zwei der insgesamt vier axial steifen Gelenkketten (57) sind an entsprechenden Befestigungseinrichtungen (52a) am zu bewegenden Bauteil (52) befestigt. Die anderen beiden axial steifen Gelenkketten (57) sind an entsprechenden Befestigungseinrichtungen (54a) an der Grundplatte (54) befestigt.

In dem zu bewegenden Bauteil (52) sind mehrere Aussparungen (52b, 52c, 52d) angebracht, welche eine störungsfreie Bewegung der Gelenkketten (55, 56, 57) sicherstellen. Eine entsprechende Aussparung (53c) ist auch in der Zwischenplatte (53) vorhanden.

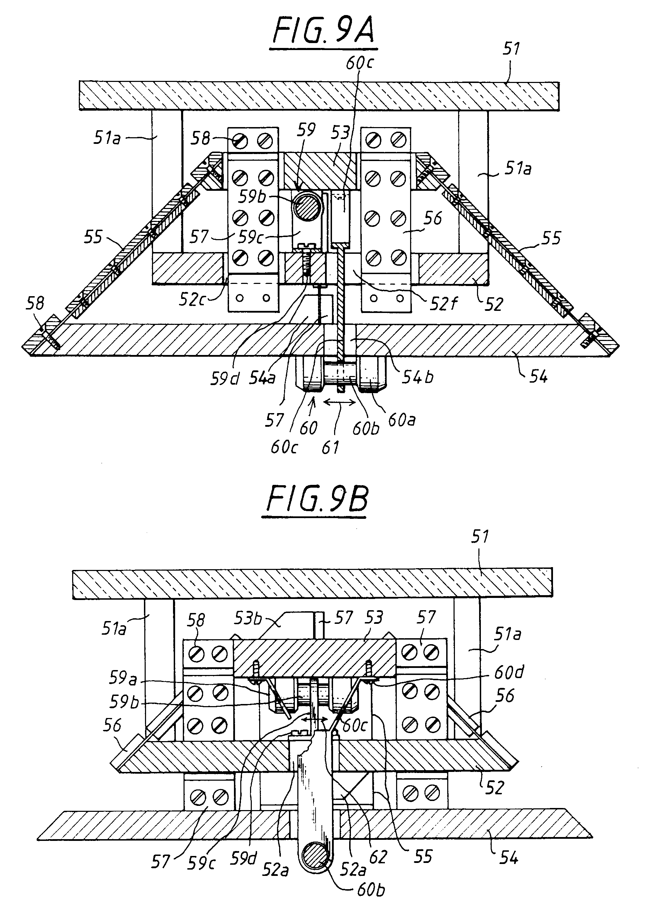

Das zu bewegende Bauteil (52) kann über die Gelenkketten (52, 56, 57) in zwei Achsen bewegt werden. Diese Bewegung kann über Linearmotoren (59, 60) erfolgen. Wie dies geschehen kann, ist aus den Figuren 9a und 9b ersichtlich.

Jeder der beiden Linearmotoren (59, 60) besitzt eine Spulenführung (59a, 60a), in welchem eine Spule (59b, 60b) geführt ist.

An jeder der beiden Spulen (59b, 60b) befindet sich eine Befestigungshalterung (59c, 60c), welche für die Bewegungsübermittlung zuständig ist.

Die Spulenführung (59a) des ersten Linearmotors (59) ist an der Zwischenplatte (53) befestigt. Seine Befestigungshalterung (59c) hat eine entsprechende Befestigungsstelle (59d) an dem zu bewegenden Bauteil (52).

Demhingegen ist der zweite Linearmotor (60) mit seiner Spulenführung (60a) an der Grundplatte (54) befestigt. Die an der Spule (60b) angreifende Befestigungshalterung (60c) hat eine Befestigungsstelle (60d) an der Zwischenplatte (53).

Der Linearmotor (59) ermöglicht dem zu bewegenden Bauteil (52) eine Bewegung entlang der Bewegungslinie (61). Demhingegen sorgt eine Bewegung des Linearmotors (60) für eine Bewegung der Zwischenplatte (53) auf der Bewegungslinie (62), wobei das an der Zwischenplatte (53) befestigte zu bewegende Bauteil (52) mitgenommen wird.

Jeder der Linearmotoren (59, 60) ist somit für je eine Bewegungsrichtung zuständig, ohne daß der andere Motor dazu einen Beitrag leisten muß, wobei aber eine kombinierte Bewegung durch Ansteuerung der beiden Motoren (59, 60) dabei nicht ausgeschlossen ist.

## Patentansprüche

1. Lagerung für ein um mindestens eine Achse relativ zu einer Grundplatte bewegliches Bauteil, dadurch gekennzeichnet, daß das Bauteil (1) mit der Grundplatte (4) über hintereinandergeschaltete Gelenkketten (5, 9; 6, 10; 12, 16; 13, 17) mit jeweils mindestens einem Gelenk (5, 9, 6, 10, 12, 16, 13, 17) verbunden ist.

2. Lagerung nach Anspruch 1, dadurch gekennzeichnet, daß die hintereinandergeschalteten Gelenkketten (5, 9; 6, 10; 12, 16; 13, 17) aus jeweils zwei Gelenkketten (5, 9; 6, 10; 12, 16; 13, 17) mit jeweils vier Gelenken (5, 9; 6, 10; 12, 16; 13, 17) aufgebaut sind.

3. Lagerung nach Anspruch 1 oder 2, dadurch gekennzeichnet, daß die Auslenkachsen der Gelenkketten (5, 9; 6, 10; 12, 16; 13, 17) senkrecht zueinander ausgerichtet sind.

4. Lagerung nach einem der Ansprüche 1-3, dadurch gekennzeichnet, daß der gemeinsame Drehpol (2) der Gelenkketten (5, 9; 6, 10; 12, 16; 13, 17) in der oberen Oberfläche (3) des Bauteils (1) liegend ist.

5. Lagerung nach einem der Ansprüche 1-4, dadurch gekennzeichnet, daß zwischen den Gelenkketten (5, 9; 6, 10; 12, 16; 13, 17) ein kegelstumpfförmiger Freiraum unter dem Mittelpunkt (2) des Bauteils (1) ist.

6. Lagerung nach einem der Ansprüche 1-5, dadurch gekennzeichnet, daß in dem kegelstumpfförmigen Freiraum ein Antrieb (18a, 18b) angeordnet ist.

7. Lagerung nach einem der Ansprüche 1-6, dadurch gekennzeichnet, daß eine Vorrichtung vorhanden ist, welche die Verlustwärme des Antriebs (18a, 18b) vom Bauteil (1) oder aus dessen Strahlengang weggeführt.

8. Lagerung nach einem der Ansprüche 1-7, dadurch gekennzeichnet, daß die Massenträgheitsmomente für beide Kippachsen auf gleiche Werte abgestimmt sind.

9. Lagerung nach einem der Ansprüche 1-8, dadurch gekennzeichnet, daß die mit der Grundplatte (4) verbundenen ersten Gelenke (5, 6) zweier sich gegenüberliegender Gelenkarme (7, 8) mit mindestens einem Verbindungskörper (11), welcher gegebenenfalls durch Aussparungen aus einem Kegelstumpf herausgearbeitet wurde, über jeweils zweite Gelenke (9, 10) verbunden sind, daß an dem Verbindungskörper (11) zwei weitere dritte Gelenke (12, 13) angebracht sind, deren Verbindungslinie senkrecht zu der Verbindungslinie zwischen den ersten Gelenken (5, 6) ausgerichtet ist, daß an den dritten Gelenken zwei weitere Gelenkarme (14, 15) angebracht sind, welche über vierte Gelenke (16, 17) mit dem Bauteil (1) verbunden sind.

10. Lagerung nach einem der Ansprüche 1-9, dadurch gekennzeichnet, daß die Gelenkketten (5, 9; 6, 10; 12, 16; 13, 17) aus Festkörpergelenken aufgebaut sind.

11. Lagerung nach einem der Ansprüche 1-10, dadurch gekennzeichnet, daß für jedes Gelenk (5, 9; 6, 10; 12, 16; 13, 17) jeweils nur eine Drehachse vorhanden ist.

12. Lagerung nach einem der Ansprüche 1-11, dadurch gekennzeichnet, daß die Gelenkkette (5, 9; 6, 10; 12, 16; 13, 17) am optischen Bauteil (1) seitlich befestigt ist.

13. Lagerung nach einem der Ansprüche 1-12, dadurch gekennzeichnet, daß das Bauteil (1) ein optisches Bauteil ist.

14. Lagerung nach Anspruch 13, dadurch gekennzeichnet, daß das optische Bauteil (1) ein Spiegel ist.

15. Lagerung nach einem der Ansprüche 1-14, dadurch gekennzeichnet, daß im Inneren der Lagerung eine Antriebsvorrichtung für ein um mindestens eine Achse relativ zu einer Basis und einem Drehpol winkelbegrenzt bewegliches Bauteil angebracht ist und daß die Antriebsvorrichtung mit Elementen (30, 31, 32, 33) aufgebaut ist, welche zusammen nach dem elektromotorischen Prinzip arbeiten.

16. Lagerung nach Anspruch 15, dadurch gekennzeichnet, daß die Antriebsvorrichtung mit Elementen (30, 31, 32, 33) aufgebaut ist, welche zusammen nach dem linearmotorischen Prinzip arbeiten.

17. Lagerung nach Anspruch 15 oder 16, dadurch gekennzeichnet, daß die Antriebsvorrichtung aus einem Anker (18a) und mindestens einem Stator (18b', 18b'') aufgebaut ist, wobei zumindest die obere Statorschale (18b') eine zentrale Öffnung (23) besitzt, deren Durchmesser größer ist als der Durchmesser einer vom Anker (18a) zum zu bewegenden Bauteil (1) gehenden axialen Halterung (19).

18. Lagerung nach einem der Ansprüche 15-17, dadurch gekennzeichnet, daß die Flächen zwischen dem Anker (18a) und dem Stator (18b', 18b'') sphärisch gestaltet sind, wobei der Mittelpunkt aller Sphären im Drehpol (2) des beweglichen Bauteils (1) liegt.

19. Lagerung nach einem der Ansprüche 15-18, dadurch gekennzeichnet, daß auf dem Anker (18a) zumindest zwei Spulen (30) angeordnet sind, daß zwischen den zwei Spulen (30) eine axial wirkende Halterung (19) für den Anker (18b) angebracht ist und daß die Massenschwerpunkte der beiden Spulen (30) und der Mittelpunkt des Durchstoßungsflächenkörpers (34) der axialen Halterung (19) in einer senkrecht zur Kippachse orientierten Schnittebene auf einer Linie orientiert sind.

20. Lagerung nach Anspruch 19, dadurch gekennzeichnet, daß auf dem Anker (18a) zwei weitere Spulen (30) angeordnet sind, daß zwischen diesen zwei Spulen (30) die axial wirkende Halterung (19) angebracht ist, daß die Massenschwerpunkte der beiden Spulen (30) und der Mittelpunkt des Durchstoßungsflächenkörpers (34) der axialen Halterung (19) in einer senkrecht zur Kippachse orientierten Schnittebene auf einer Linie orientiert sind und daß diese Linie senkrecht zur Verbindungslinie der anderen beiden Spulen (30) orientiert ist.

21. Lagerung nach einem der Ansprüche 15-20, dadurch gekennzeichnet, daß auf der zum Anker (18a) weisenden Oberfläche eines Statorteils (18b', 18b'') zumindest vier Pole (32) und zwei Magnete (31) angeordnet sind, wobei die Magnete (31) ober- und/oder unterhalb von den Spulen (30) auf dem Anker (18a) angeordnet sind.

22. Lagerung nach Anspruch 21, dadurch gekennzeichnet, daß auf der zum Anker (18a) weisenden Oberfläche des Stators (18b', 18b'') zumindest zwei weitere Magnete (31) angeordnet sind, wobei die Magnete (31) ober- bzw. unterhalb von den Spulen (30) auf dem Anker (18a) angeordnet sind.

23. Lagerung nach einem der Ansprüche 21-22, dadurch gekennzeichnet, daß die Magnete (31) in Aufsicht rechteckförmig sind und dabei ihre Außenseiten jeweils kleiner sind, als die korrespondierenden Seiten der Spulen (30).

24. Lagerung nach einem der Ansprüche 21-23, dadurch gekennzeichnet, daß zwischen der Polen (32) und Magneten (31) ein Luftspalt vorhanden ist, welcher größer ist als der Luftspalt (40) zwischen den sich gegenüber liegenden Polen (31) der beiden Statorteile (18b', 18b'').

25. Lagerung nach einem der Ansprüche 19-20, dadurch gekennzeichnet, daß die Wicklungen der Spulen (30) zueinander parallel angeordnet sind.

26. Lagerung nach einem der Ansprüche 15-25, dadurch gekennzeichnet, daß an einer axialen Halterung (19) eine vom Drehpol (2) abgewandte axiale Verlängerung (35) angebracht ist, daß in der unteren Statorschale (18b'') eine zentrale Öffnung (41), welche die freie Bewegung des Ankers (18a) im vorbestimmten Winkelbereich nicht behindert, angebracht ist, daß diese Verlängerung (35) so lang ist, daß sie aus dem Gehäuse (38) des unteren Statorteils (18b'') hinausragt, und daß an dieser Verlängerung (35) ein einstellbares Federelement zu einem die Antriebseinrichtung beinhaltenden Gehäuse angebracht ist.

27. Lagerung nach einem der Ansprüche 15-26, dadurch gekennzeichnet, daß die Antriebsvorrichtung an einen Positionsregelkreis angeschlossen ist, welcher mittels Sensoren (22) die Kipplage des zu bewegenden Bauteils (1) bestimmt.

28. Lagerung nach Anspruch 1, dadurch gekennzeichnet, daß unterhalb des zu bewegenden Bauteils (41, 51) mindestens ein weiteres, axial steifes Gelenk (46, 57) angeordnet ist.

29. Lagerung nach Anspruch 28, dadurch gekennzeichnet, daß das weitere Gelenk (46, 57) das zu bewegende Bauteil (41, 51) so aufgebaut und angeordnet ist, daß es das zu bewegende Bauteil (41, 51) zentral abstützt.

30. Lagerung nach einem der Ansprüche 28 oder 29, dadurch gekennzeichnet, daß sich ihre Wirkungslinien in der Ruhelage in der gewünschten Drehachse des bewegten Bauteils (41, 51) treffen.

31. Lagerung nach einem der Ansprüche 28-30, dadurch gekennzeichnet, daß das die zentrale Abstützung bewirkende Gelenk (46, 57) möglichst weit außerhalb der Spiegelnormalen angeordnet ist.

32. Lagerung nach einem der Ansprüche 28-31, dadurch gekennzeichnet, daß das die zentrale Abstützung bewirkende Gelenk (46, 57) zweigeteilt ist.

33. Lagerung nach einem der Ansprüche 28-32, dadurch gekennzeichnet, daß das die zentrale Abstützung bewirkende Gelenk (46, 57) aus Blattfedern aufgebaut ist.

34. Lagerung nach einem der Ansprüche 28-33, dadurch gekennzeichnet, daß das die zentrale Abstützung bewirkende Gelenk (46, 57) aus einer Blattfeder (46) mit einem zentralen Versteifungsglied (46c) aufgebaut ist.

35. Lagerung nach einem der Ansprüche 28-34, dadurch gekennzeichnet, daß mindestens ein Linearmotor (59, 60) in der Lagerung angeordnet ist, welcher die Kippung des zu bewegenden Bauteils (46, 57) in einer Achse veranlassen kann.

36. Lagerung nach einem der Ansprüche 28-35, dadurch gekennzeichnet, daß die Lagerung des zu bewegenden Bauteils (46, 57) zweiachsig und hintereinandergeschaltet ist.
